(19) **Europäisches Patentamt / European Patent Office / Office européen des brevets**

(11) **EP 1 904 338 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(21) Anmeldenummer: **06741637.0**

(22) Anmeldetag: **12.06.2006**

(51) Int Cl.:
**B60N 2/44** *(2006.01)*     **A47C 27/10** *(2006.01)*
**A47C 27/08** *(2006.01)*     **A47C 4/54** *(2006.01)*

(86) Internationale Anmeldenummer:
**PCT/CH2006/000312**

(87) Internationale Veröffentlichungsnummer:
**WO 2007/009275 (25.01.2007 Gazette 2007/04)**

(54) **PNEUMATISCHE KISSENSTRUKTUREN**

PNEUMATIC CUSHION STRUCTURE

STRUCTURES DE COUSSIN PNEUMATIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.07.2005 CH 12012005**

(43) Veröffentlichungstag der Anmeldung:
**02.04.2008 Patentblatt 2008/14**

(73) Patentinhaber: **Prospective Concepts AG
8152 Glattbrugg (CH)**

(72) Erfinder:
• **HABEGGER, Daniel
CH-8104 Weiningen (CH)**

• **KEREKES, Laszlo
CH-8037 Zürich (CH)**

(74) Vertreter: **Stump, Beat et al
Stump & Partner AG
Patentanwälte AG
Dufourstrasse 116
8008 Zürich (CH)**

(56) Entgegenhaltungen:
**FR-A- 2 195 155      GB-A- 1 381 952
US-A- 3 644 950      US-A- 5 096 529
US-A- 5 154 649      US-A- 5 423 094
US-B1- 6 209 159      US-B1- 6 393 642**

**Beschreibung**

Die vorliegende Erfindung bezieht sich auf spezielle Formen von pneumatischen Kissen gemäss dem Oberbegriff des Patentanspruches 1.

Jeder unter Luftdruck gesetzte Hohlkörper hat - auf Grund des Tensorcharakters des Druckes - das Ziel, unabhängig von der ursprünglichen Form dieses Hohlkörpers, einen runden Querschnitt anzunehmen, wenn nicht gar kugelförmig zu werden. Diese generelle Formtendenz verlangt zur Überwindung den Einsatz von besonderen Mitteln und Massnahmen. Eine solche Massnahme ist das Einziehen von Stegen in einen solchen Hohlkörper, oder das Einlegen von Hohlkörpern in beispielsweise eine Stoffhülle, welche das Volumen begrenzt und auch formen kann. Beispiele solcher Massnahmen sind bekannt aus den Dokumenten WO 2004 069 005 A1 EP 15 4158 A1 und EP 1534556 A1 Die Patentschrift FR 2 195 155 zeigt, ein Möbel, dass aus nicht mit einander verbundenen aufblasbaren Blasen besteht, die über eine äussere Umhüllung in relativer Lage zu einander festgehalten werden. Die feste Umfassung der Blasen durch die Umhüllung sorgt für eine gewisse Steifigkeit der Anordnung, die jedoch den Anforderungen im Hinblick auf die Beanspruchbarkeit nicht genügt, wenn verschiedenste Formen durch solch eine Anordnung gebildet werden sollen.

US 5 423 094 A1 zeigt ein peumatisches Kissen nach dem oberbegriff des Anspruchs 1.

Die Umlaufspannung σ eines pneumatisch gespannten Körpers ist geweben durch

$$\sigma \left[ \frac{N}{m} \right] = p \cdot R$$

wo

p = relativer Luftdruck im Inneren des Hohlkörpers (N/m²)

R = Lokaler Krümmungsradius des Hohlkörpers (m)

Dies weist auf eine Eigenheit von pneumatischen Strukturen mit eingezogenen textilen Stegen hin: Werden die Stege - um eine möglichst glatte oder gar ebene Oberfläche zu bewirken, nahe zu einander gerückt, so nimmt der lokale Krümmungsradius des Hohlkörpers gleichzeitig ab, und damit auch seine Umlaufspannung σ : Der Körper wird sehr weich. 3 Diese Eigenschaft kann überwunden werden, wie das bei EP 153 4556 A1 gezeigt ist, indem die druckbeaufschlagten Hohlkörper in eine textile Hülle eingelegt werden. Bestimmend für die Weichheit eines solchen Sitzes ist dann nicht mehr die Umlaufspannung des einzelnen Hohlkörpers sondern jene der textilen Hülle.

Mit pneumatischen Hohlkörpern ist - gerade im Bereich des Designs von Sitzmöbeln - die Formensprache beschränkt.

Die Aufgabe der vorliegenden Erfindung ist es daher, diesen Beschränkungen entgegen zu wirken und Mittel und Massnahmen bereit zu stellen, um diese Beschränkungen zu überwinden.

Die Lösung der gestellten Aufgabe ist wiedergegeben im kennzeichnenden Teil des Anspruches 1 hinsichtlich der wesentlichen Merkmale und in den weiteren Ansprüchen hinsichtlich besonderer Ausbildungen.

Anhand der beigefügten Zeichnungen sind mehrere Ausführungsbeispiele des Erfindungsgedankens näher beschrieben. Es zeigen

Fig. 1a ein erstes Ausführungsbeispiel eines pneumatischen Kissens im Querschnitt AA gemäss Fig. 2 im teilweise aufgeblasenen Zustand,

Fig. 1b das Ausführungsbeispiel von Fig. 1a im vollständig aufgeblasenen Zustand,

Fig. 2 eine Phantom-Draufsicht auf das erste Ausführungsbeispiel gemäss Fig. 1,

Fig. 3 eine Variante der Grundplatte in einem Schnitt BB gemäss Fig. 2,

Fig. 4 ein zweites Ausführungsbeispiel eines pneumatischen Kissens im Querschnitt AA gemäss Fig. 2,

Fig. 5 das zweite Ausführungsbeispiel mit einer Variante der Grundplatte.

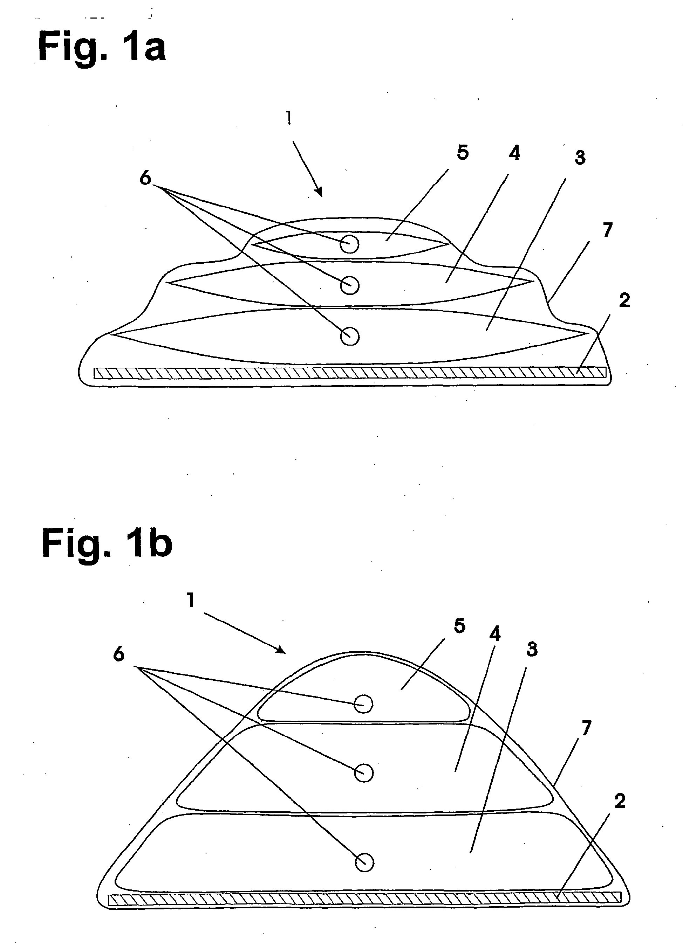

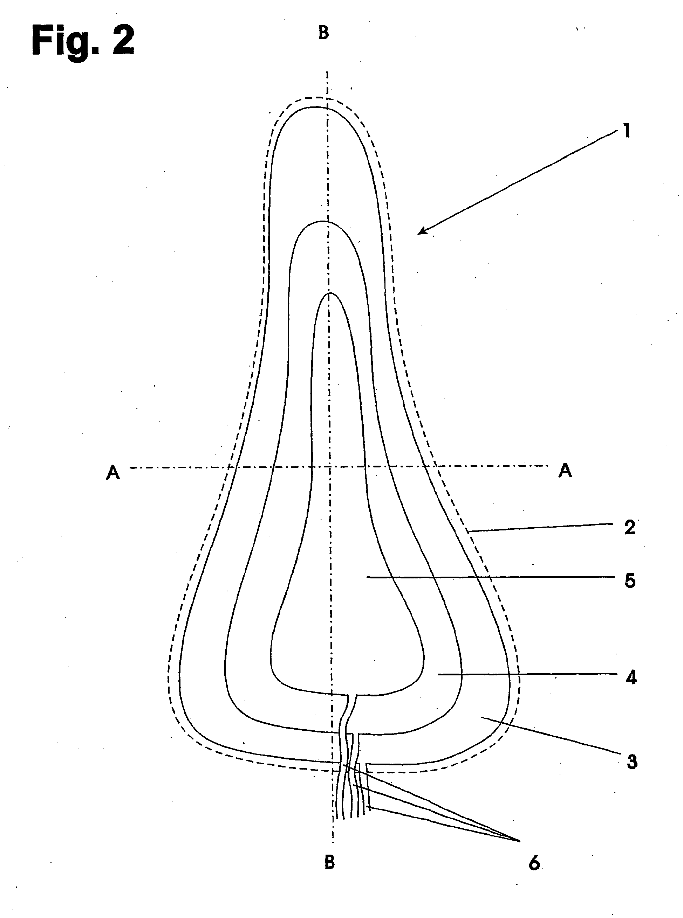

Fig. 1 zeigt ein erstes Ausführungsbeispiel des Erfindungsgedankens in Form eines pneumatischen Kissens 1; Fig. la im wenig aufgeblasen Zustand, Fig. 1b im voll aufgeblasen Zustand und Fig. 2 in einer Draufsicht in Phantomdarstellung. Fig. 1a, b sind Schnitte AA durch die Fig. 2. In Fig. 1a, b ist eine Grundplatte 2 dargestellt, welche die Rückseite - im Allgemeinen die untere - des Kissens 1 bildet. Sie kann aus einem Blech oder aus GFK oder einem harten Kunststoff bestehen. Über der Grundplatte 2 ist eine erste Blase 3 eingelegt, im Wesentlichen form- und grössengleich mit der Grundplatte 2; über dieser befindet sich eine zweite Blase 4 und über dieser eine dritte Blase 5. Jede höher liegende Blase ist kleiner als die darunterliegende. Die Grössen der Blasen 3, 4, 5 sind in der Draufsicht gemäss Fig. 2 angedeutet. Diese genannten Blasen sind aus einem elastischen Kunststoff, beispielsweise aus PU gefertigt und weisen je einen Anschluss 6 für Druckgas auf. Die ganze Anordnung von Grundplatte 2, Blasen 3, 4, 5 sind von einem Überzug 7 aus beispielsweise wenig elastischem textilen Gewebe umschlossen. Dieser Überzug 7 ist so geschnitten, und genäht, dass die Blasen 3, 4, 5 diesen in die gewünschte Form bringen, wie in Fig. 1b beispielsweise dargestellt.

Soll die Form weniger kantig sein, genügen auch zwei Blasen 3, 4. Die Blasen 3, 4, 5 können durch unterschiedliche Drucke beaufschlagt werden. Dabei gilt immer die genannte Beziehung σ = p.R. Der Ueberzug 7 kann so geschnitten und genäht sein, dass er die Grundplatte 2 ganz überzieht oder auch nur an ihrem Rand befestigt sein. Falls die Blasen 3; 4, 5 je einen Anschluss 6 für Druckgas aufweisen, kann jede über ein eigenes Druckregime verfügen.

Dadurch ist es möglich, die mit R (dem Krümmungsradius der Blasen 3, 4, 5) kleiner werdende Umlaufsspannung σ über dem Druck p mindestens teilweise zu kompensieren.

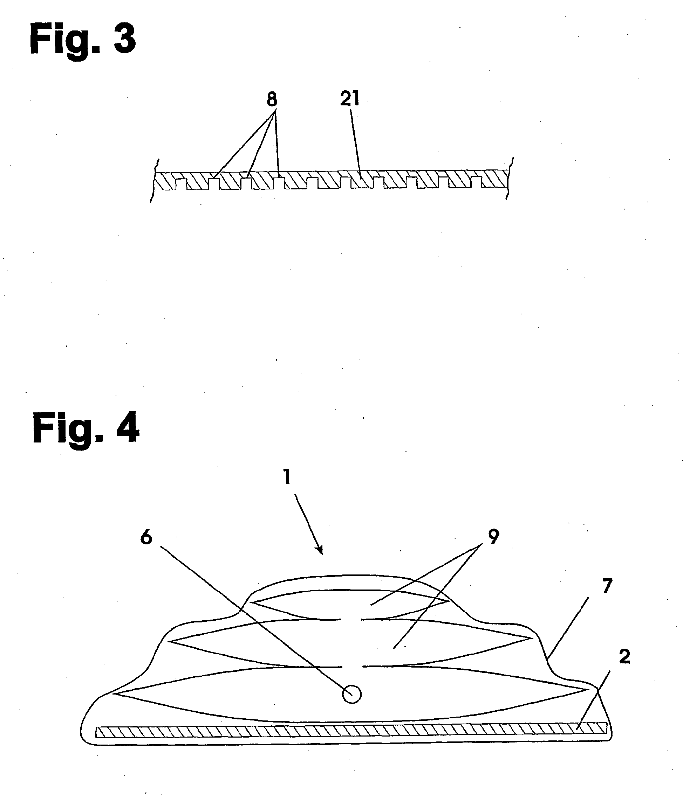

Eine Variante zur Grundplatte 2 ist in Fig. 3 dargestellt als Schnitt BB in Fig. 2. Anstelle der Platte mit konstanter Dikke, weist die Grundplatte 2 streifenweise Stellen 8 mit reduzierter Dicke auf. Diese Formgebung erteilt der Grundplatte 2 eine erhöhte Biegsamkeit um die Querachse AA, falls dies wegen einer konturierten Auflage für das Kissen notwendig oder gewünscht ist.

Die Grundplatte 2 kann ferner aus Holz, Kunststoff, einem textilen Material, Gitter, Geflecht oder Kombinationen hiervon gefertigt sein. Ferner kann die Grundplatte auch grösser sein, als die unterste Blase oder auch eine von ihr abweichende Form aufweisen.

In Fig. 4 ist eine Variante zu Fig. 1a dargestellt. Diese wird beispielsweise verwendet, wenn es möglich und angezeigt ist, die Blasen 3, 4, 5 mit dem gleichen Druck zu beaufschlagen. Anstelle von nach Aussen geführten Anschlüssen 6, sind hier die Blasen 3, 4, 5 untereinander verbunden, vorzugsweise an einer solchen Stelle, wo die Blasen 3, 4, 5 im aufgeblasenen Zustande grosse Berührungsflächen aufweisen. An die Stelle von Anschlüssen 6 treten dann Verbindungsöffnungen 9.

Eine weitere Variante bezieht sich auf den Überzug 7. Dieser kann - ganz oder nur teilweise - aus einem dehnbaren textilen Material bestehen. Falls der Überzug '7 nur teilweise aus dehnbarem textilen Material besteht, vorzugsweise im Bereich der dritten Blase 5, so können die beiden verwendeten textilen Materialien im unteren Bereich der Blase 1 oder der Blasen 1, 2 aufeinander laminiert sein.

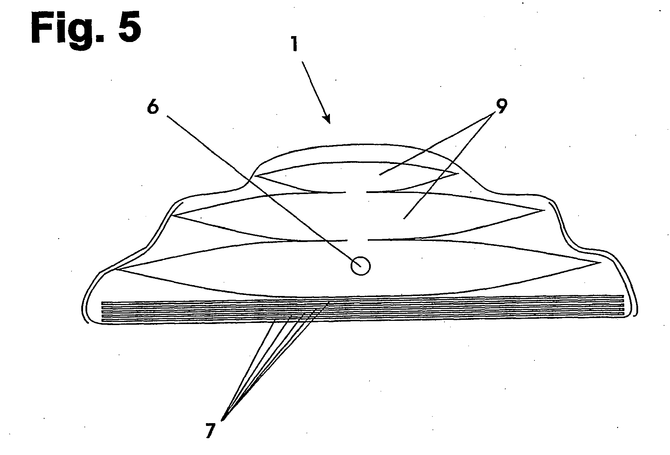

Eine in Fig. 5 dargestellte Variante bezieht sich ebenfalls auf die Grundplatte 2. Anstelle einer eigentlichen Platte werden hier zwei oder mehr Schichten eines textilen Materials aufeinander laminiert. Das hier verwendete textile Material kann auch jenes für den Überzug 7 verwendete sein. Gleichzeitig ist hier dargestellt, wie das textile Material des unteren Bereiches des Kissens 1 mit jenem des oberen Bereiches laminiert ist.

### Patentansprüche

1. Pneumatisches Kissen (1) mit einem Überzug (7) und mindestens zwei Blasen (3, 4) mit einem Anschluss für Druckgas, wobei

- eine Grundplatte (2) vorhanden ist, und **dadurch gekennzeichnet, dass**
- die zweite Blase (4) auf die erste Blase (3) aufgelegt ist, wobei die zweite Blase (4) kleiner sein kann, als ie erste Blase (3),
- der Überzug (7) aus einem textilen Material besteht und die mindestens zwei Blasen (3, 4) bedeckt und entweder die Grundplatte (2) ebenfalls ganz überzieht oder lediglich an ihr befestigt ist,
- die Grösse und Form des Überzugs (7) so bemessen ist, dass die mindestens zwei Blasen (3, 4) diesen im druckgasbeaufschlagten Zustande im Wesentlichen füllen können,
- die Blasen (3,4) an einer Stelle , wo sie im aufgeblasenen Zustand grosse Berührungsflächen aufweisen, untereinander über Verbindungsöffnungen (9) verbunden sind, wobei
- die Grundplatte (2) auf ihrer Unterseite streifenweise Stellen (8)mit reduzierter Dicke aufweist, so dass diese Grundplatte um eine Achsrichtung AA quer zu ihrer Längserstreckung eine erhöhte Biegsamkeit aufweist.

2. Pneumatisches Kissen (1) nach Patentanspruch 1, **dadurch gekennzeichnet, dass** der Überzug (7) aus einem wenig dehnbaren textilen Material gefertigt ist.

3. Pneumatisches Kissen (1) nach Patentanspruch 1 oder 2, **dadurch gekennzeichnet, dass** die Grundplatte (2) aus Metall, Holz, Kunststoff, einem textilen Material, Gitter, Geflecht oder Kombinationen hiervon gefertigt ist.

4. Pneumatisches Kissen (1) nach Patentanspruch 1, 2 oder 3, **dadurch gekennzeichnet, dass** die Grundplatte (2) im Wesentlichen grössen- und formgleich ist, wie die unterste Blase(3).

5. Pneumatisches Kissen (1) nach Patentanspruch 3, **dadurch gekennzeichnet, dass** die Grundplatte (2) gekrümmt ist oder diesbezüglich eine komplexe Form aufweist.

6. Pneumatisches Kissen (1) nach einem der Patentansprüche 1 bis 5, **dadurch gekennzeichnet, dass**

- jede der zwei Blasen (3, 4) einen separaten Anschluss (6) für Druckgas aufweist, so dass jede Blase (3, 4) ein eigenes Druckregime aufweisen kann.

7. Pneumatisches Kissen (1) nach einem der Patentansprüche 1 bis 5, **dadurch gekennzeichnet, dass**

- auf die erste Blase (3) eine zweite Blase (4) aufgelegt ist, welche kleiner sein kann, als die erste Blase (3),
- die beiden Blasen (3, 4) je eine Verbindungsöffnung (9) aufweisen, welche luftdicht nach aussen miteinander verbunden sind, so dass die beiden Blase (3, 4) sich immer auf dem gleichen Druck befinden.

8. Pneumatisches Kissen (1) nach einem der Patentansprüche 1 bis 5, **dadurch gekennzeichnet, dass**

   - auf die zweite Blase (4) eine dritte Blase (5) aufgelegt ist, welche kleiner sein kann, als die zweite Blase (4),
   - jede der drei Blasen (3, 4, 5) einen separaten Anschluss (6) für Druckgas aufweist, so dass jede der drei Blasen (3, 4, 5) ein eigenes Druckregime aufweisen kann.

9. Pneumatisches Kissen (1) nach Patentanspruch 6, **dadurch gekennzeichnet, dass**

   - auf die zweite Blase (4) eine dritte Blase (5) aufgelegt ist, welche kleiner sein kann, als die zweite Blase (4)
   - die drei Blasen (3, 4, 5) je eine Verbindungsöffnung (9) aufweisen, welche luftdicht nach aussen miteinander verbunden sind, so dass sich die drei Blasen (3, 4, 5) immer auf dem gleichen Druck befinden.

10. Pneumatisches Kissen (1) nach einem der Patentansprüche 6 bis 8, **dadurch gekennzeichnet, dass** der Überzug (7) mindestens im Bereich der jeweils obersten Blase (4) oder (5) aus einem elastischen textilen Material gefertigt ist.

11. Pneumatisches Kissen (1) nach Patentanspruch 2, **dadurch gekennzeichnet, dass** die Grundplatte (2) durchgehend aus einem Material konstanter Dicke gefertigt ist.

12. Pneumatisches Kissen (1) nach Patentanspruch 1, **dadurch gekennzeichnet, dass** die Grundplatte (2) aus aufeinander laminierten Schichten eines textilen Materials besteht.

13. Pneumatisches Kissen (1) nach Patentanspruch 3 und 12, **dadurch gekennzeichnet, dass** das textile Material jenes textile Material geringer Dehnbarkeit ist, aus welchem der Überzug (7) gefertigt ist.

## Claims

1. Pneumatic cushion (1) with a covering (7) and at least two balloons (3, 4) with a connection for compressed gas, wherein

   - a base plate (2) is present, and
   - the second balloon (4) is placed onto the first balloon (3), wherein the second balloon (4) can be smaller than the first balloon (3),
   **characterized in that**
   - the covering (7) consists of a textile material and covers the at least two balloons (3, 4) and either also completely covers the base plate (2) or is merely fastened to it,
   - the size and shape of the covering (7) is dimensioned so that the at least two balloons (3, 4) can substantially fill it in the state when acted upon by compressed gas,
   - the balloons (3, 4) are connected with each other via connecting openings (9) at a site where they have large contact surfaces in the inflated state, wherein
   - the base plate (2) has on its underside strip sites (8) with reduced thickness, so that this base plate has an increased flexibility about an axial direction AA transversely to its longitudinal extent.

2. Pneumatic cushion (1) according to Claim 1, **characterized in that** the covering (7) is produced from a slightly stretchable textile material.

3. Pneumatic cushion (1) according to Claim 1 or 2, **characterized in that** the base plate (2) is made from metal, wood, plastic, a textile material, mesh, netting or combinations hereof.

4. Pneumatic cushion (1) according to Claim 1, 2 or 3, **characterized in that** the base plate (2) is substantially identical in size and shape to the lowest balloon (3).

5. Pneumatic cushion (1) according to Claim 3, **characterized in that** the base plate (2) is curved or has a complex shape in this respect.

6. Pneumatic cushion (1) according to one of Claims 1 to 5, **characterized in that**

   - each of the two balloons (3, 4) has a separate connection (6) for compressed gas, so that each balloon (3, 4) can have its own pressure regime.

7. Pneumatic cushion (1) according to one of Claims 1 to 5, **characterized in that**

   - a second balloon (4), which can be smaller than the first balloon (3), is placed onto the first balloon (3),
   - the two balloons (3, 4) each have a connecting opening (9), which are connected with each other in an air-tight manner toward the exterior, so that the two balloons (3, 4) are always at the same pressure.

**8.** Pneumatic cushion (1) according to one of Claims 1 to 5, **characterized in that**

- a third balloon (5), which can be smaller than the second balloon (4), is placed onto the second balloon (4),
- each of the three balloons (3, 4, 5) has a separate connection (6) for compressed gas, so that each of the three balloons (3, 4, 5) can have its own pressure regime.

**9.** Pneumatic cushion (1) according to Claim 6, **characterized in that**

- a third balloon (5), which can be smaller than the second balloon (4), is placed onto the second balloon (4),
- the three balloons (3, 4, 5) each have a connecting opening (9), which are connected with each other in an air-tight manner toward the exterior, so that the three bubbles (3, 4, 5) are always at the same pressure.

**10.** Pneumatic cushion (1) according to one of Claims 6 to 8, **characterized in that** the covering (7) is made from an elastic textile material at least in the region of the respectively uppermost balloon (4) or (5).

**11.** Pneumatic cushion (1) according to Claim 2, **characterized in that** the base plate (2) is produced throughout from a material of constant thickness.

**12.** Pneumatic cushion (1) according to Claim 1, **characterized in that** the base plate (2) consists of layers of a textile material laminated onto one another.

**13.** Pneumatic cushion (1) according to Claim 3 and 12, **characterized in that** the textile material is the textile material of slight stretchability, from which the covering (7) is made.

**Revendications**

**1.** Coussin pneumatique (1) avec une housse (7) et au moins deux bulles (3, 4) avec un raccord pour du gaz comprimé,

- une embase (2) étant présente et **caractérisé en ce que**
- la deuxième bulle (4) est posée sur la première bulle (3), la deuxième bulle (4) pouvant être plus petite que la première bulle (3),
**Caractérisée par**
- la housse (7) est constituée d'une matière textile et recouvre les au moins deux bulles (3, 4) et recouvre également en totalité l'embase (2) ou est simplement fixée sur cette dernière,
- la dimension et la forme de la housse (7) est dimensionnée de sorte que les aux moins deux bulles (3, 4) sont susceptibles de remplir sensiblement cette dernière à l'état soumis au gaz comprimé,
- en un endroit où à l'état gonflé elles comportent de grandes surfaces de contact, les bulles (3, 4) sont reliées entre elles par l'intermédiaire d'orifices de liaison (9),
- l'embase (2) comporte sur sa face inférieure, par raies des endroits (8) d'épaisseur réduite, de sorte qu'autour d'une direction axiale AA transversale à son extension longitudinale, ladite embase fait preuve d'une flexibilité augmentée.

**2.** Coussin pneumatique (1) selon la revendication 1, **caractérisé en ce que** la housse (7) est fabriquée dans une matière peu extensible.

**3.** Coussin pneumatique (1) selon la revendication 1 ou 2, **caractérisé en ce que** l'embase (2) est fabriquée en métal, en bois, en matière plastique, en une matière textile, en treillis, en tissage ou dans une combinaison de ces derniers.

**4.** Coussin pneumatique (1) selon la revendication 1, 2 ou 3, **caractérisé en ce que** l'embase (2) est de dimension et forme sensiblement identiques à celles de la bulle (3) inférieure.

**5.** Coussin pneumatique (1) selon la revendication 3, **caractérisé en ce que** l'embase (2) est curviligne ou présente une forme complexe dans ce rapport.

**6.** Coussin pneumatique (1) selon l'une quelconque des revendications 1 à 5, **caractérisé en ce que**

- chacune des deux bulles (3, 4) comporte un raccord (6) séparé pour du gaz comprimé, de sorte que chaque bulle (3, 4) puisse disposer de son propre régime de pression.

**7.** Coussin pneumatique (1) selon l'une quelconque des revendications 1 à 5, **caractérisé en ce que**

- sur la première bulle (3) est posée une deuxième bulle (4) qui peut être plus petite que la première bulle (3),
- les deux bulles (3, 4) comportent chacune un orifice de liaison (9) lesquels sont reliés l'un à l'autre en étant étanches à l'air sur l'extérieur, de sorte que les deux bulles (3, 4) soient toujours sous la même pression.

**8.** Coussin pneumatique (1) selon l'une quelconque des revendications 1 à 5, **caractérisé en ce que**

- sur la deuxième bulle (4) est posée une troisième bulle (5) qui peut être plus petite que la deuxième bulle (4),
- chacune des trois bulles (3, 4, 5) comporte un raccord (6) séparé pour du gaz comprimé, de sorte que chacune des trois bulles (3, 4, 5) puisse disposer de son propre régime de pression.

9. Coussin pneumatique (1) selon la revendication 6, **caractérisé en ce que**

- sur la deuxième bulle (4) est posée une troisième bulle (5) qui peut être plus petite que la deuxième bulle (4),
- les trois bulles (3, 4, 5) comportent chacune un orifice de liaison (9) lesquels sont reliés les uns aux autres en étant étanches à l'air sur l'extérieur, de sorte que les trois bulles (3, 4, 5) soient toujours sous la même pression.

10. Coussin pneumatique (1) selon l'une quelconque des revendications 6 à 8, **caractérisé en ce qu'**au moins dans la zone de la bulle (4) ou (5) respectivement supérieure, la housse (7) est fabriquée dans une matière textile élastique.

11. Coussin pneumatique (1) selon la revendication 2, **caractérisé en ce que** l'embase (2) est fabriquée en continu dans une matière d'épaisseur constante.

12. Coussin pneumatique (1) selon la revendication 1, **caractérisé en ce que** l'embase (2) est constituée de couches laminées les unes sur les autres d'une matière textile.

13. Coussin pneumatique (1) selon la revendication 3 et 12, **caractérisé en ce que** la matière textile est ladite matière textile de faible extensibilité dans laquelle est fabriquée la housse (7).

# Fig. 1a

# Fig. 1b

# Fig. 2

# Fig. 3

8  21

# Fig. 4

1

6  9

7

2

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004069005 A1
- EP 154158 A1
- EP 1534556 A1
- FR 2195155
- US 5423094 A1